# EUROPEAN PATENT APPLICATION

(11) **EP 1 750 375 A2**
(43) Date of publication of application: **07.02.2007**
(21) Application number: 06118427.1
(22) Date of filing: 04.08.2006
(51) Int. Cl.: H04B 1/18

(54) **Matching device for an antenna and high-frequency receiver using the same**

(30) Priority: 05.08.2005 JP 2005228199; 27.04.2006 JP 2006123220
(71) Applicant: MATSUSHITA ELECTRIC INDUSTRIAL CO., LTD., Kadoma-shi, Osaka 571-8501 (JP)
(72) Inventor: Kamimoto, Ryuichi, Matsushita Elec. Ind. Co., Ltd., Chuo-ku, Osaka, Osaka-shi 540-6319 (JP); Ito, Akira, Matsushita Elec. Ind. Co., Ltd., Chuo-ku, Osaka, Osaka-shi 540-6319 (JP); Hibino Yasuhiro, Matsushita Elec. Ind. Co., Ltd., Chuo-ku, Osaka, Osaka-sho 540-6319 (JP)
(74) Representative: Pautex Schneider, Nicole Véronique

(57) **Abstract**

Disclosed is a high-frequency receiver having both interference characteristic and reception characteristic. The high-frequency receiver includes electronic switch (36 ) that is connected in parallel to input and output terminals of antenna amplifying circuit (34), and antenna control unit (22c) that controls electronic switch (36)and antenna amplifying circuit (34). When an antenna control signal output from high-frequency receiving unit (23) is input to antenna control unit (22c), electronic switch (36) is opened and simultaneously power supply to antenna amplifying circuit (34) starts in a weak electric field area, and electronic switch (36) is closed and simultaneously power supply to antenna amplifying circuit (34) stops in a strong electric field area.

## Description

### Technical Field

The present invention relates to a matching device for an antenna that enables good reception even in a reception area where there is a high possibility that a strong interference signal are received or an area where a television broadcast signal is weak, and to a high-frequency receiver using such an MATCHING DEVICE FOR AN ANTENNA.

### Background Art

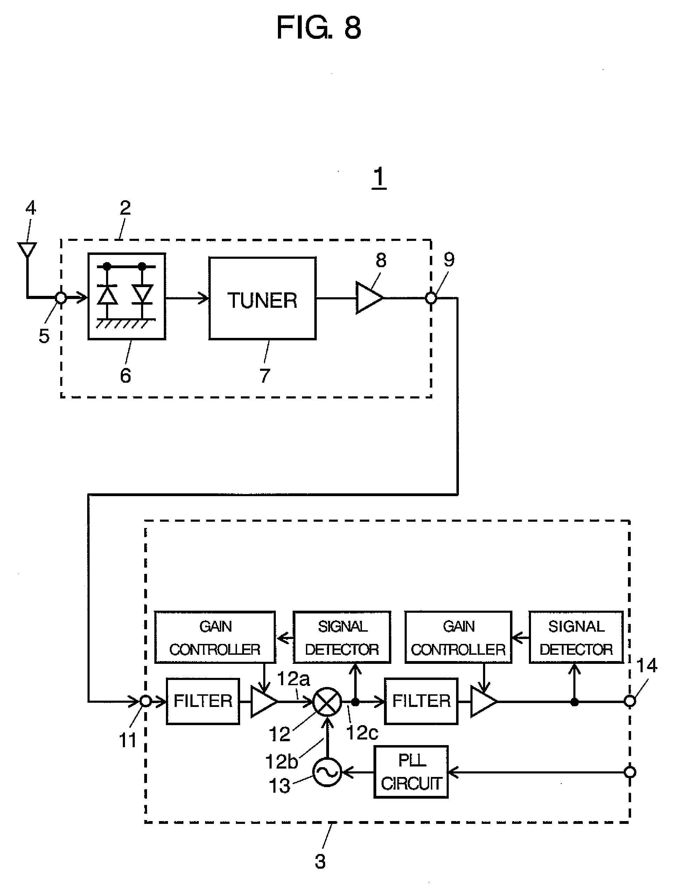

Fig. 8 shows a known matching device for an antenna and a high-frequency receiver using such a matching device for an antenna. Known high-frequency receiver 1 includes matching device for an antenna 2 and high-frequency receiving unit 3 connected to an output terminal of matching device for an antenna 2.

An input signal input to antenna 4 is input to input terminal 5 provided in matching device for an antenna 2. The input signal input to input terminal 5 is input to matching device 7, which reduces tuning loss, through protection circuit 6. Protection circuit 6 is provided to protect back-stage circuits or electronic elements from a surge voltage due to static electricity such that they are not destroyed. An output signal extracted from matching device 7 is amplified by antenna amplifying circuit 8 and then extracted from output terminal 9.

The output signal extracted from output terminal 9 is input to first input terminal 12a of mixer 12 through input terminal 11 of high-frequency receiving unit 3. An output signal of oscillator 13 is input to second input terminal 12b of mixer 12. For this reason, an output signal that is converted to have an intermediate frequency according to the signal input to first input terminal 12a and second input terminal 12b of mixer 12 is output from terminal 12c of mixer 12 and is then output from output terminal 14.

Japanese Patent Unexamined Publication No. 2005-057642 is an example of the related art of the invention.

However, in known matching device for an antenna 2 and high-frequency receiver using matching device for an antenna 2, if a high-level interference signal having a frequency of a desired input signal is input from input terminal 5, the high-level interference signal interfere with antenna amplifying circuit 8 of matching device for an antenna 2.

In particular, a recently introduced digital broadcast signal has a low transmission output level so as not to interfere with an analog broadcast signal. Accordingly, upon reception of the digital broadcast signal, a high analog broadcast signal may interfere with the digital broadcast signal. For this reason, signal distortion occurs in antenna amplifying circuit 8 of matching device for an antenna 2 or high-frequency receiving unit 3, and thus normal reception is impossible.

### Disclosure of the Invention

The invention has been finalized in order to solve the above-problems, and an object of the invention is to provide a matching device for an antenna that can exclude adverse effect of an interference signal and improve reception sensitivity in a weak electric field.

According to an aspect of the invention, a matching device for an antenna includes:
(a) a first input terminal, to which a received signal to be supplied from an antenna is input,
(b) a matching device that is connected to the first input terminal and reduces tuning loss,
(c) an antenna amplifying circuit that is connected to an output terminal of the matching device and amplifies the received signal,
(d) a first output terminal, through which an output signal of the antenna amplifying circuit is extracted,
(e) a first electronic switch that is connected in parallel to input and output terminals of the antenna amplifying circuit, and
(f) an antenna control terminal that controls the first electronic switch and the antenna amplifying circuit.

When an antenna control signal output from a high-frequency receiving unit is input to the antenna control terminal, the first electronic switch is opened so as to operate the antenna amplifying circuit in a first electric field area, and the first electronic switch is closed so as to stop the operation of the antenna amplifying circuit in a second electric field area.

Accordingly, for example, in case of reception in a strong electric field area in which a strong interference signal exists, the first electronic switch is closed and simultaneously the power supply to the antenna amplifying circuit stops. Then, it is possible to output a signal with suppressed distortion from the output terminal of the matching device, without operating the antenna amplifying circuit. In addition, for example, in case of reception in a weak electric field area, the first electronic switch is opened and simultaneously the power supply to the antenna amplifying circuit is performed. Accordingly, it is possible to output a signal with low noise by operating the antenna amplifying circuit.

The matching device for an antenna according to the invention can input a stable signal to the high-frequency receiving unit, thereby improving reception quality. In addition, it is possible to reduce the size of the high-frequency receiver by using the matching device for an antenna according to the invention.

### Brief Description of the Drawings

Fig. 1 is a block diagram of a high-frequency receiver according to a first embodiment of the invention.
Fig. 2 is a graph showing the relationship between a desired signal, an interference signal, and BER.
Fig. 3A is a circuit diagram of a matching device according to a second embodiment of the invention.
Fig. 3B is diagram showing an impedance characteristic by a matching device of a small antenna on an admittance chart according to a second embodiment of the invention.
Fig. 3C is a diagram showing an impedance characteristic by a matching device of a small antenna on a Smith chart according to a second embodiment of the invention.
Fig. 4 is a circuit diagram of an attenuator according to a third embodiment of the invention.
Fig. 5 is a circuit diagram of the attenuator according to the third embodiment of the present invention;
Fig. 6 is a block diagram of a high-frequency receiver according to a fourth embodiment of the invention.
Fig. 7 is a block diagram of a high-frequency receiver according to a fifth embodiment of the invention.
Fig. 8 is a block diagram of a high-frequency receiver according to the related art.

### Description of Reference Numerals and Signs

22: matching device for an antenna
22a: input terminal
22b: output terminal
22c: antenna control terminal
33: matching device
34: antenna amplifying circuit
36: electronic switch

### Preferred Embodiments for Carrying Out the Invention

### (First Embodiment)

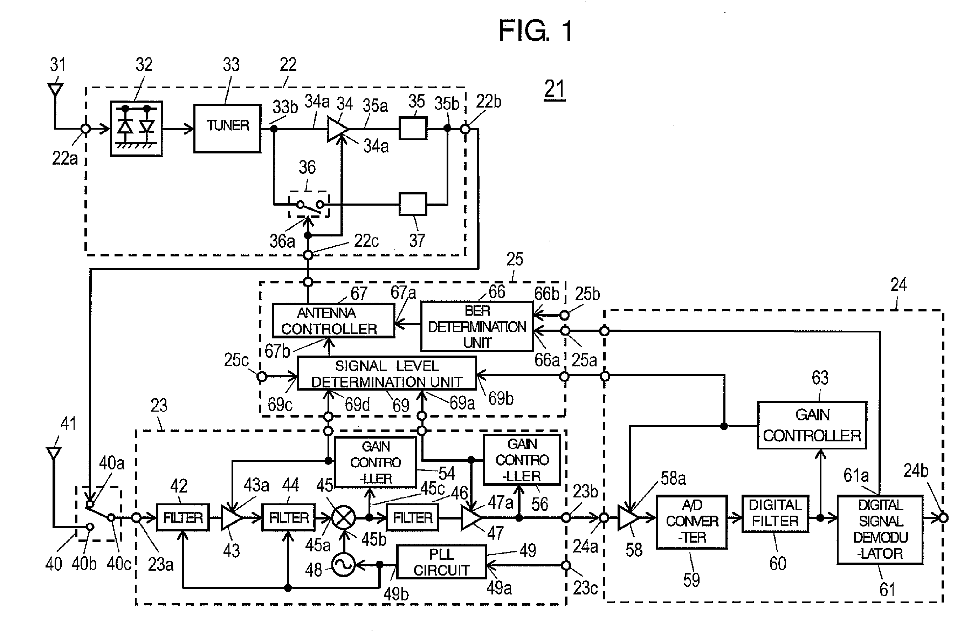

A first embodiment of the invention will be described with reference to Fig. 1. Fig. 1 is a block diagram of a high-frequency receiver. In the first embodiment, high-frequency receiver 21 that receives a digital television broadcast signal.

High-frequency receiver 21 includes matching device for an antenna 22, high-frequency receiving unit 23 that is connected to output terminal 22b of matching device for an antenna 22, demodulator 24 that is connected to output terminal 23b of high-frequency receiving unit 23 and demodulates a digital signal, and antennal control unit 25 that controls matching device for an antenna 22.

The configuration of matching device for an antenna 22 will now be described. Matching device for an antenna 22 has input terminal 22a that is connected to small antenna 31 with a length shorter than a quarter wavelength, and output terminal 22b. Between input terminal 22a and output terminal 22b, protection circuit 32 that protects back-stage electric circuits from electrical shock, such as static electricity from small antenna 31, matching device 33 that reduces tuning loss between input and output, antenna amplifying circuit 34 that amplifies a received signal, and attenuator 35 that uses resistors are connected in that order as viewed from input terminal 22a.

A serial connector having electronic switch 36 that can select opening/closing and attenuator 37 that uses resistors is connected in parallel between input terminal 34a of antenna amplifying circuit 34 and output terminal 35b of attenuator 35.

Matching device for an antenna 22 has antenna control terminal 22c, to which an antenna control signal is input. The antenna control signal input from antenna control terminal 22c is input to control input terminal 36a of electronic switch 36 and control input terminal 34a of antenna amplifying circuit 34.

The configuration of electronic switch 40 that is provided between matching device for an antenna 22 and high-frequency receiving unit 23 will now be described. First terminal 40a of electronic switch 40 is connected to output terminal 22b of matching device for an antenna 22. High-frequency receiving unit 23 is designed to have input impedance of 75 Ω.

Accordingly, output terminal 22b of matching device for an antenna 22 also has output impedance of 75 Ω to be tuned to input impedance of 75 Ω of high-frequency receiving unit 23. Further, a microstrip line with impedance of 75 Ω is provided between matching device for an antenna 22 and high-frequency receiving unit 23. Thus, it is possible to reduce tuning loss due to electrical connection.

Second terminal 40b of electronic switch 40 is connected to external antenna 41. Common terminal 40c of electronic switch 40 is connected to input terminal 23a of high-frequency receiving unit 23.

The configuration of high-frequency receiving unit 23 will be described. High-frequency receiving unit 23 has input terminal 23a and output terminal 23b. Between input terminal 23a and output terminal 23b, filter 42 that suppresses an interference signal, gain controllable amplifying circuit 43 having gain control input 43a, filter 44 that is connected to an output of amplifying circuit 43 and suppresses an interference signal, mixer 45 that is connected to first input terminal 45a, filter 46 that passes a frequency-converted output signal and suppresses an interference signal, and gain controllable amplifying circuit 47 having gain control input 47a are connected in that order as viewed from input terminal 23a.

Second input terminal 45b of mixer 45 is connected to an output terminal of oscillator 48. An oscillation frequency of oscillator 48 is adjusted by a control voltage extracted from output terminal 49b of phase locked loop (PLL) circuit 49. Control data from input terminal 23c is input to input terminal 49a of PLL circuit 49. The control voltage extracted from output terminal 49b of PLL circuit 49 is input to tuning circuits of filters 42 and 44 to vary tuning frequencies of the filters. Filters 42 and 44 may be fixed filters having fixed tuning frequencies, not varying the tuning frequencies.

An output signal of filter 46 is input to gain controllable amplifying circuit 47 having gain control input 47a. An output signal of amplifying circuit 47 is input to gain controller 56 to which an input signal is input and from which a gain control voltage is output. The gain control voltage is input to gain control input 47a of amplifying circuit 47.

The configuration of demodulator 24 will now be described. Demodulator 24 has input terminal 24a and output terminal 24b. Between input terminal 24a and output terminal 24b, gain controllable amplifying circuit 58 having gain control input 58a, A/D converter 59, digital filter 60, and digital demodulator 61 are connected in that order as viewed from input terminal 24a.

An output signal extracted from digital filter 60 is input to gain controller 63 to which the input signal is input and from which the gain control voltage is output. The gain control voltage is input to gain control input terminal 58a of amplifying circuit 58.

The configuration of antenna control unit 25 will now be described. Antenna control unit 25 includes BER (Bit Error Ratio) determination unit 66, signal level determination unit 69, and antenna controller 67 having input terminals 67a and 67b to which output signals of both BER determination unit 66 and signal level determination unit 69 are respectively input.

The BER output from output terminal 61a of digital signal demodulator 61 is input to input terminal 66a of BER determination unit 66 through input terminal 25a of antenna control unit 25. Input terminal 66b of BER determination unit 66 is connected to BER input terminal 25b to which a BER reference value is input. Instead of the BER determination unit, a carrier-to-noise ratio (C/N) detector may be used to detect reception quality C/N value.

Signal level determination unit 69 has input terminals 69a, 69b, 69c, and 69d. The gain control voltages output from gain controllers 56, 63, and 54 are input to input terminals 69a, 69b, and 69d, respectively.

The gain control voltages are compared with individual reference voltages to determine their amplitudes. The referencevoltagesmaybeinput, for example, from input terminal 69c through reference voltage input terminal 25c of antenna control unit 25.

An antenna control signal that controls matching device for an antenna 22 is input to switch control input 36a of electronic switch 36 and control input 34a of antenna amplifying circuit 34 based on determination signals output from BER determination unit 66 and signal level determination unit 69.

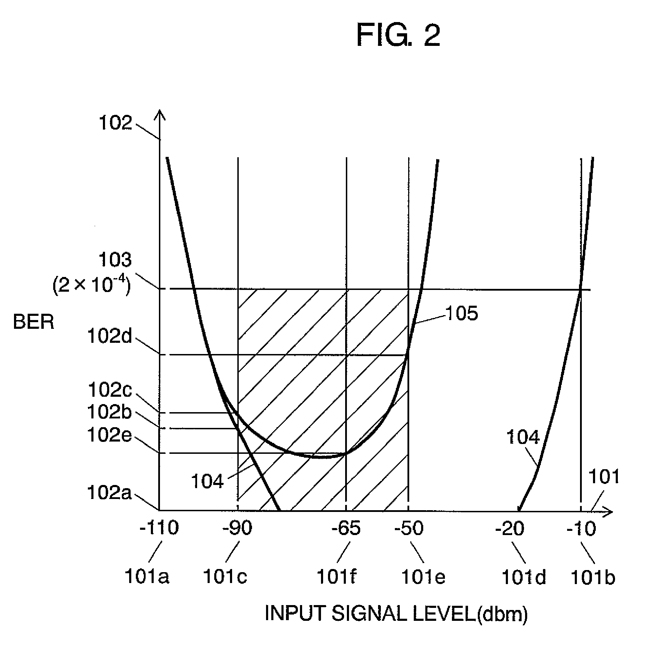

The operation of high-frequency receiver 21 having the above-described configuration will be described with reference to Figs. 1 and 2 by way of an example where a high-frequency signal of a UHF band channel is received. It is assumed that output terminal 22b of matching device for an antenna 22 and input terminal 23a of high-frequency receiving unit 23 are connected to each other by electronic switch 40.

As the reception condition, in addition to the relationship between the amplitudes of the signal levels of the digital and analog broadcast signals, the relationship between the amplitudes of the analog broadcast signals or the amplitudes of the digital broadcast signals can be exemplified. In this case, the same effects can also be obtained.

The operation of matching device for an antenna 22 of high-frequency receiving unit 21 will now be described. Matching device for an antenna 22 can select one of an output signal extracted from antenna amplifying circuit 34 and an output signal extracted from matching device 33.

Hereinafter, a case where an output signal of antenna amplifying circuit 34 is selected will be described. When an antenna control signal output from antenna controller 67 is input to matching device for an antenna 22, electronic switch 36 is opened (off state) and power is supplied to antenna amplifying circuit 34. That is, antenna amplifying circuit 34 is in an operation state and the connection to attenuator 37 is blocked.

A received signal to small antenna 31 is input to matching device 33 through protection circuit 32. Matching device 33 is provided to suppress tuning loss between small antenna 31 and antenna amplifying circuit 34, and to suppress transmission loss of the received signal. Thus, the received signal to small antenna 31 is transmitted to antenna amplifying circuit 34 with suppressed transmission loss.

Antenna amplifying circuit 34 amplifies the received signal. An output signal of antenna amplifying circuit 34 is input to attenuator 35. Attenuator 35 may have resistors, such that output impedance of matching device for an antenna 22 may have only a resistive component, with no a reactance component, and thus it may not depend on the magnitude of the frequency. For example, the magnitude is set to 75 Ω.

Accordingly, even though input impedance of high-frequency receiving unit 23 is temporarily changed by received channels, it is possible to suppress tuning loss with high-frequency receiving unit 23 between the channels to be the same within an allowable range. That is, it is possible to suppress a variance in reception sensitivity between the channels almost constant. In addition, it is possible to set an output level from output terminal 22b to an optimum value by selecting resistance of attenuator 35.

Next, a case where an output signal of matching device 33 is selected in matching device for an antenna 22 will be described. In this case, when an antenna control signal output from antenna controller 67 is input to matching device for an antenna 22, electronic switch 36 is short-circuited and power supply to antenna amplifying circuit 34 stops.

Accordingly, an output signal of matching device 33 is output to output terminal 22b through electronic switch 36 and attenuator 37. Attenuator 37 may be an attenuator having resistors, such that output impedance of matching device for an antenna 22 may have only a resistive component, with no reactance component, and thus it may not depend on the magnitude of the frequency. For example, the magnitude is set to 75 Ω.

Accordingly, even though input impedance of high-frequency receiving unit 23 is temporarily changed by received channels, it is possible to suppress tuning loss with high-frequency receiving unit 23 almost constant within an allowable range. That is, it is possible to keep reception sensitivity between the channels constant.

As described above, it is possible to select one of the output signal of antenna amplifying circuit 34 or the output signal of matching device 33 by controlling matching device for an antenna 22 with the antenna control signal.

For instance, in a case where the output signal of antenna amplifying circuit 34 is selected, matching device for an antenna 22 has a received channel gain on a UHF band of approximately 10 dB when loss in protection circuit 32 and matching device 33 is -1 dB, a gain in antenna amplifying circuit 34 is 15 dB, and loss in attenuator 37 is -4 dB.

Since small antenna 31 has a length shorter than a quarter wavelength, it has a gain lower than that of external antenna 41 by -10 dB. Thus, when external antenna 41 or small antenna 31 is used, almost the same input level is input to high-frequency receiving unit 23.

In a case where the output signal of matching device 33 is selected, the gain of matching device for an antenna 22 is output at a level lower by gain in antenna amplifying circuit 34 of 15 dB, since loss in protection circuit 32 and matching device 33 is -1 dB, loss in attenuator 37 is -4 dB, and gain in antenna amplifying circuit 34 is 0 dB.

The operation of high-frequency receiving unit 23 will now be described. An output signal of matching device for an antenna 22 is input to filter 42 through input terminal 23a. Filter 42 suppresses an interference signal other than desired signal. An output signal of filter 42 is amplified by amplifying circuit 43 and input to filter 44. After filter 44 suppresses the interference signal other than desired signal, the desired signal is input to first input terminal 45a of mixer 45. An output signal of oscillator 48 controlled by PLL circuit 49 is input to second input terminal 45b.

PLL control data is input to input terminal 49a of PLL circuit 49 through input terminal 23c. The oscillation frequency of oscillator 48 and tuning frequencies of filters 42 and 44 are controlled by the control voltage output from output terminal 49b of PLL circuit 49. With this circuit operation, the desired signal is selected among received signals.

A desired signal, for example, with an intermediate frequency of 8 MHz is output from output terminal 45c of mixer 45. The signal with intermediate frequency is input to filter 46, which suppresses the interference signal, and gain controller 54. A fixed BPF (bandpass filter) is used as filter 46, thereby suppressing, for example, an interference signal close to the desired signal.

Gain control voltage output from gain controller 54 is input to gain control input terminal 43a of amplifying circuit 43, which controls gain so that an output signal of mixer 45 can be constant.

An output signal of filter 46 is amplified by amplifying circuit 47, is output from output terminal 23b of high-frequency receiving unit 23, and is input to gain controller 56 that outputs the gain control voltage. The gain control voltage is input to gain control input terminal 47a of amplifying circuit 47, and an output signal of amplifying circuit 47 is gain-controlled to have a constant level.

That is, the received signal input to input terminal 23a is frequency-converted by mixer 45 and gain-controlled by amplifying circuits 43 and 47, such that a signal output from output terminal 23b can have a constant level.

Next, the operation of demodulator 24 will now be described. An output signal of high-frequency receiving unit 23 is input to amplifying circuit 58 through output terminal 23b and input terminal 24a. A signal amplified by amplifying circuit 58 is input to A/D converter 59 that converts analog signals to digital signals. A digital signal output from A/D converter 59 is input to digital filter 60 that suppresses an interference signal. A digital signal output from digital filter 60 is input to digital signal demodulator 61. A TS (transport stream) signal is output from output terminal 24b of digital signal demodulator 61. An output signal of digital filter 60 is input to gain controller 63 that outputs the gain control voltage. The gain control voltage is input to gain control input terminal 58a of amplifying circuit 58. Amplifying circuit 58 controls the gain such that an input level to digital signal demodulator 61 can be constant.

Next, the operation of BER determination unit 66 of antenna control unit 25 will be described. BER determination unit 66 compares a BER reference value, which is input through BER input terminal 25b, and BER, which is output from digital signal demodulator 61. A determination signal output from BER determination unit 66 is input to input terminal 67a of antenna controller 67.

Fig. 2 is a graph showing the relationship between BER and an input signal level to input terminal 22a of high-frequency receiver 21. It is assumed that the output signal from antenna amplifying circuit 34 is selected in matching device for an antenna 22.

In the description of the invention, for convenience, it is assumed that an input signal level having a reception level equal to or higher than -50 dBm is defined as a strong electric field area, and an input signal level having a reception level equal to or lower than -90 dBm is defined as a weak electric field area.

Amplifying circuit 43 has a gain control range of 0 to -50 dBm as an input signal level at input terminal 22a. Amplifying circuit 47 has a gain control range of -50 to -90 dBm as an input signal level at input terminal 22a. Amplifying circuit 58 has a gain control range equal to or lower than -90 dBm as an input signal level at input terminal 22a.

In Fig. 2, horizontal axis 101 indicates an input signal level from small antenna 31. For example, reference numeral 101a indicates a weak signal level (-110 dBm) and reference numeral 101b indicates a strong signal level (-10 dBm). Vertical axis 102 indicates BER (Bit Error Ratio). BER 102a indicates an error-free state. BER 103 indicates a magnitude of 2 × 10⁻⁴. The reception quality, i.e., C/N value, is regarded to be poor when BER is greater than 2 × 10⁻⁴.

Characteristic curve 104 indicates BER when only a desired signal is received. It can be seen from characteristic curve 104 that BER becomes 102b at input signal level 101c (-90 dBm) and BER is deteriorated at input signal level 101a (-110 dBm). The deterioration results from a noise index of high-frequency receiver 21 and deteriorated C/N of a received signal.

BER is deteriorated at an input signal level greater than signal level 101d (-20 dBm) since signal distortion occurs due to a high-level desired signal input to antenna amplifying circuit 34andhigh-frequencyreceivingunit23. Inparticular, when a signal with a level higher than -10 dBm is input to antenna amplifying circuit 34, an effect by distortion may be serious.

Characteristic curve 105 indicates BER when a desired signal and an interference signal that is about 40 dB greater than the desired signal are received. BER becomes 102c at input signal level 101c (-90 dBm), which is almost the same as characteristic curve 104.

Since a strong interference signal, together with a desired signal (-50 dBm), is received at input signal level 101e (-50 dBm), the magnitude of BER is deteriorated to 102d. This is because an interference signal greater than the desired signal by about 40 dB is input and then signal distortion occurs in antenna amplifying circuit 34 and high-frequency receiving unit 23. That is, BER 102d indicates that BER is deteriorated, and is close to BER 103 (2 × 10⁻⁴) of a reference value indicating that C/N value is determined to be poor.

However, BER is 102e at input signal level 101f (-65 dBm), which is better than BER 102d at input signal level 101e (-50 dBm). This is because the interference signal is reduced from -10 dBm to -25 dBm, even though the desired signal is reduced from -50 dBm to -75 dBm.

Accordingly, it is possible to improve BER by setting input signal level 101e (-50 dBm) as low as input signal level 101f (-65 dBm). In order to improve BER, electronic switch 36 is closed, power supply to antenna amplifying circuit 34 stops, and an output signal of matching device 33 is output from output terminal 22b. A gain difference of matching device for an antenna 22 between the operation state and non-operation state of antenna amplifying circuit 34 is preferably, for example, equal to or greater than 15 dB.

As described above, matching device for an antenna 22 has a gain of 10 dB in a case where an output signal from antenna amplifying circuit 34 is selected. Thus, a signal that is 10 dB greater than an input level to antenna amplifying circuit 34 is input to an input terminal of high-frequency receiving unit 23. The input terminal of high-frequency receiving unit 23 is connected to filters 42 and 44 that suppress interference signals.

For example, signal distortion easily occurs in matching device for an antenna 22 compared to high-frequency receiving unit 23, which causes BER to be deteriorated. For example, signal distortion occurs in antenna amplifying circuit 34 of matching device for an antenna 22 when a signal equal to or greater than -10 dBm is input.

As described above, when an interference signal much greater than a desired signal is input, BER determination unit 66 compares the magnitude of the received BER with the BER reference value (2 × 10⁻⁴). When the received BER is greater than the BER reference value (2 × 10⁻⁴), electronic switch 36 of matching device for an antenna 22 is closed by an antenna control signal output from antenna controller 67 and simultaneously power supply to antenna amplifying circuit 34 stops, such that input signal level 101e (-50 dBm) can be set to input signal level 101f (-65 dBm) .

When a weak electric field level less than input signal level 101c (-90 dBm) is received, electronic switch 36 may be opened and simultaneously antenna amplifying circuit 34 may be in the operation state.

That is, when BER determination unit 66 determines the magnitude of the received BER, it is difficult to determine whether the BER is deteriorated due to the interference signal or weak electric field.

Next, the operation of signal level determination unit 69 of antenna control unit 25 will be described. Amplifying circuit 43 has a gain control range of 0 to -50 dBm as an input signal level at input terminal 23a.

Thus, amplifying circuit 47 has a gain control range of (-50 dBm +V1) to (-90 dBm +V1). Accordingly, it is possible to provide high-frequency receiver 21 that optimizes the input signal level and suppresses noise and distortion.

Next, the operation of high-frequency receiver 21 will be described according to the amplitudes of the desired signal and the interference signal in high-frequency receiver 21. In this case, the reception condition is that small antenna 31 is used, and digital broadcast is received as a desired signal of -50 dBm and analog broadcast is received as an interference signal of -10 dBm at input terminal 22a.

The interference signal is suppressed, for example, by 15 dB by filter 42. The suppressed interference signal of -25 dBm is input to .amplifying circuit 43. Amplifying circuit 43 executes a gain control of 0 dBm to -50 dBm as an input signal level at input terminal 23a. Thus, for an interference signal of -25 dBm, amplifying circuit 43 executes a gain control of 25 dBm that is obtained by subtracting a gain signal of -50 dBm from the interference signal of -25 dBm.

Accordingly, the interference signal input to amplifying circuit 47 has a level of (-50 dBm + V1 - Vs), in which -50 dBm is obtained by subtracting a gain control of 25 dBm from the interference signal of -25 dBm, adding the gain V1, and subtracting a suppressed amount Vs for the interference signal in filter 46. For example, when a SAW filter is used as filter 46, it is possible to make the suppressed amount Vs equal to or greater than 40 dB. Thus, it is possible to make the interference signal input to amplifying circuit 47 equal to or less than (-90 dBm + V1).

Similarly, the desired signal output from filter 46 has a level of (-75 dBm + V1), in which -75 dBm is obtained by subtracting a gain control of 25 dBm from the desired signal of -50 dBm, and adding the gain V1. That is, since the interference signal is suppressed by filter 46 by 25 dB from the desired signal, signal distortion rarely occurs in back-stage circuits.

The desired signal (-75 dBm + V1 output from filter 46 is input to amplifying circuit 47. Amplifying circuit 47 has a gain control range of (-50 dBm + V1) to (-90 dBm + V1). Thus, for a desired signal of (-75 dBm + V1), amplifying circuit 47 executes a gain control of -15 dBm that is obtained by subtracting the lower limit (-90 dBm + V1) of the gain control range from the desired signal of (-75 dBm + V1). Thus, amplifying circuit 47 executes a gain control of -15 dBm according to the desired signal. That is, a gain control voltage at gain control input 47a varies depending on the magnitude of the desired signal.

The magnitude of desired signal varies depending on the magnitude of the interference signal. As the interference signal becomes strong, the gain control becomes large in amplifying circuit 43. As a result, since the desired signal input to amplifying circuit 47 becomes weak, amplifying circuit 47 is controlled such that the gain becomes larger.

That is, when a signal is received in a strong electric field area where a strong interference signal exists, signal level determination unit 69 is used to compare the gain control voltages of gain controllers 54 and 56 with the upper limit and lower limit of the reference voltage, thereby detecting the amplitude of interference signal level.

The upper and lower limits of the reference voltage of signal level determination unit 69 can be input through reference voltage input terminal 25c. Thus, it is possible to easily set the optimum value through an external terminal.

A determination signal from signal level determination unit 69 is input to input terminal 67b of antenna controller 67. By the antenna control signal output from antenna controller 67, power supply to antenna amplifying circuit 34 stops and simultaneously electronic switch 36 is closed.

Thus, since it is possible to reduce the interference signal, for example, by 15 dB, it is possible to prevent distortion from occurring in matching device for an antenna 22 and to suppress distortion from occurring in amplifying circuit 43 and mixer 45, thereby improving interference-resistant characteristics of high-frequency receiver 21. In this case, the desired signal is changed from -50 dBm to -75 dBm that is a relatively low level. As shown in characteristic curve 105 of Fig. 2, the BER is not deteriorated.

When only a desired signal (equal to or more than -50 dBm) is received without an interference signal, a signal with a constant level, which is gain-controlled by amplifying circuit 43 having a gain control range of, for example, 0 dBm to -50 dBm, is input to amplifying circuit 47. Thus, since gain control voltage of amplifying circuit 47 has a minimum gain, the gain control voltage of gain controller 56 remains unchanged.

It is possible to detect the magnitude of the interference signal level by using the gain control voltages of gain controllers 54 and 56 to determine by signal level determination unit 69. A determination signal from signal level determination unit 69 is input to input terminal 67b of antenna controller 67. By the antenna control signal output from antenna controller 67, power supply to antenna amplifying circuit 34 stops and simultaneously electronic switch 36 is closed.

Accordingly, since it is possible to reduce the interference signal by 15 dB, it is possible to prevent distortion from occurring in matching device for an antenna 22 and to suppress distortion from occurring in amplifying circuit 43 and mixer 45, thereby improving interference-resistant characteristics of high-frequency receiver 21.

Next, as the reception condition, a case where a desired signal is received in a weak electric field area (equal to or less than -90 dBm) will be described. When a desired signal is received in a weak electric field area (equal to or less than -90 dBm), amplifying circuits 43 and 47 are controlled so as to obtain maximum gains, and a signal with a constant level, which is gain-controlled by amplifying circuit 58 having a gain control range equal to or less than -90 dBm, is input to A/D converter 59. Thus, the gain control voltage of gain controller 63 is changed.

Accordingly, it is possible to detect the magnitude of desired signal level by using gain control voltage of gain controller 63 to determine by signal level determination unit 69. By antenna controller 67 to which a determination signal from signal level determination unit 69 is input, power is supplied to antenna amplifying circuit 34 of matching device for an antenna 22 and electronic switch 56 is opened.

Thus, an output signal of antenna amplifying circuit 34 is output from output terminal 22b, and the input level to high-frequency receiving unit 23 can be raised by 15 dB compared to a case where the output signal of matching device 33 is output from output terminal 22b. Accordingly, it is possible to improve reception sensitivity with respect to a weal signal level.

That is, when a signal is received in a strong electric field area to which a high-level interference signal is expected to be input, it is configured such that the gain of matching device for an antenna 22 becomes low by the antenna control signal extracted from antenna controller 67. As a result, a signal with no distortion is output from high-frequency receiving unit 23.

In a weak electric field area, matching device for an antenna 22 operates with a gain close to a maximum value by an antenna control signal from antenna controller 67. Thus, it is possible to output a signal with suppressed noise from high-frequency receiving unit 23.

Accordingly, it is possible to provide high-frequency receiver 21 having both an interference characteristic in a strong electric field area and reception sensitivity in a weak electric field area by switching the operation state of matching device for an antenna 22 by the antenna control signal.

The determination signal from BER determination unit 66 is input to antenna controller 67. BER determination unit 66 compares the magnitude of the received BER with the BER reference value (2 × 10⁻⁴) . Thus, since antenna controller 67 performs determination using the determination signals of signal level determination unit 69 and BER determination unit 66, accuracy in determination increases.

The gain control ranges of individual amplifying circuits 43, 47, and 58 of high-frequency receiving unit 23 may be reset based on the interference characteristic and reception sensitivity. Only one of gain controllers 54, 56, and 63 may not be sufficient to detect the magnitudes of the desired signal and interference signal. In this case, some of gain controllers 54, 56, and 63 may be used to detect the magnitudes of the desired signal and interference signal.

The gain control voltages are configured to correspond to variable reception conditions. Accordingly, it is possible to select optimum reception performance in a short time to correspond to a case where a signal is received in a strong electric field area where there is a high possibility that a strong interference signal is received or a case where a signal is received in a weak electric field area. Accordingly, this is desirable when TV signals are received during movement.

A D/A converter (not shown) may be provided between gain controllers 54, 56, and 63 and the signal level determination unit, and the digital values output from the D/A converter may be signal-processed through I2C (Inter Integrated Circuit) bus lines. In this case, since signal processing can be performed through common I2C bus lines, wiring is simplified.

Even though the BER from digital signal demodulator 61 is input to BER determination unit 66 in the first embodiment of the invention, C/N values from digital signal demodulator 61 may be input to C/N determination unit 70 (not shown).

The supply and stop of power to antenna amplifying circuit 34 and the opening and closing of electronic switch 36 should be controlled such that the signals input to high-frequency receiving unit 23 are continuous. Discontinuous signals result in unstable images or discontinuous voices.

This can be prevented by stopping power supply to antenna amplifying circuit 34 after electronic switch 36 is closed and by opening electronic switch 36 after power supply to antenna amplifying circuit 34 starts. That is, a signal received from one of both sides should be input to high-frequency receiving unit 23.

Even though super single mixer 45 is used in high-frequency receiving unit 23, direct-conversion mixer may be used. That is, two mixers for I and Q signals are used as mixer 45, and the oscillation signals that are output from oscillator 48 and have a phase difference of 90° to each other are input to the mixers for I and Q signals.

When the direct-conversion mixer is used, frequencies after direct-conversion become low-frequency signals of the I and Q signals. That is, since it is possible to perform signal processing to low frequencies, integration is facilitated, and interference with other signals is difficult to occur.

Even though a case where digital TV broadcast signals are received has been described in the first embodiment of the invention, the same is applied to a case where analog TV broadcast signals are received. That is, an analog signal demodulator (not shown) may be used, instead of digital signal demodulator 24, and an S/N detection signal from analog signal demodulator 24c may be used. Accordingly, it is possible to obtain the same effect by inputting the S/N detection signal to the S/N determination unit, instead of BER determination unit 66, and inputting a determination value from the S/N determination unit to antenna controller 67.

Unnecessary high-frequency radiation signals may interfere with matching device for an antenna 22. Thus, matching device for an antenna 22 may be high-frequency shielded. In the first embodiment of the invention, since a serial circuit of electronic switch 36 and attenuator 37 is incorporated in matching device for an antenna 22, it is possible to protect matching device for an antenna 22 from external unnecessary radiation signals with high frequencies.

The first embodiment of the invention will be summarized as follows:

Matching device for an antenna 22 according to the invention is connected to input terminal 23a of high-frequency receiving unit 23 that receives TV broadcast signals. Matching device for an antenna 22 includes first input terminal 22a to which the received signal input through antenna 31 is input, and matching device 33 that is connected to first input terminal 22a and suppresses tuning loss. Matching device for an antenna 22 further includes antenna amplifying circuit 34 that is connected to output terminal 33b of matching device 33 and amplifies received signals, and first output terminal 22b from which an output signal of antenna amplifying circuit 34 is extracted. Matching device for an antenna 22 further includes first electronic switch 36 that is connected in parallel to input terminal 34a and output terminal 34b of antenna amplifying circuit 34. Further, antenna control terminal 22c that controls first electronic switch 36 and antenna amplifying circuit 34 is provided.

When an antenna control signal output from high-frequency receiving unit 23 is input to antenna control terminal 22c, matching device for an antenna 22 opens first electronic switch 36 and operates antenna amplifying circuit 34, for example, in a first electric field area, i.e. , in a weak electric field area. Matching device for an antenna 22 closes first electronic switch 36 and stops the operation of the antenna amplifying circuit 34, for example, in a second electric field area, i.e. , in a strong electric field area.

### (Second Embodiment)

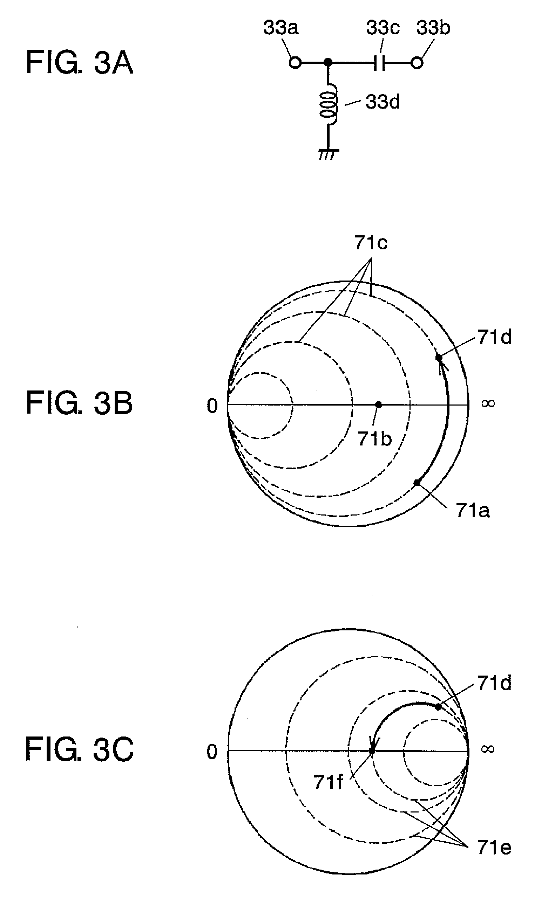

A second embodiment describes matching device 33 that is used in matching device for an antenna 22 with reference to Figs. 3a, 3b, and 3c.

Fig. 3a is a representative circuit diagram of matching device 33. Matching device 33 suppresses tuning loss between small antenna 31 and antenna amplifying circuit 34, and reduces transmission loss of received signals. Terminals 33a and 33b are input and output terminals of matching device 33, respectively.

Fig. 3b shows impedance on an admittance chart. Small antenna 31 (see Fig. 1) receives UHF and VHF bands. Since a portable small antenna is not easy to have a length of a quarter wavelength, it has input impedance 71a with large resistance in a VHF band, particularly. It is assumed that there is no effect of protection circuit 32 on impedance. Antenna amplifying circuit 34 has input impedance 71b close to, for example, 150 Ω.

In Fig. 3b, impedance 71a of small antenna 31 is rotated in a counterclockwise direction along constant conductance circle 71c by inductor 33d (see Fig. 3a) connected in parallel. As a result, it moves to impedance 71d.

Fig. 3c shows impedance on a Smith chart. Impedance 71d is rotated in a counterclockwise direction along constant resistance circle 71e by capacitor 33c connected in series. As a result, it moves to impedance 71f.

By using inductor 33d and capacitor 33c to move impedance, it is possible to make impedance on small antenna 31 seen from output terminal 33b close to input impedance of antenna amplifying circuit 34. That is, it is possible to secure tuning between small antenna 31 and antenna amplifying circuit 34. Thus, signals received by small antenna 31 are input to antenna amplifying circuit 34 with low transmission loss.

Since inductor 33d and capacitor 33c of matching device 33 can be selected to have optimum values by means of electronic switch 36, it is possible to secure optimum tuning between small antenna 31 and antenna amplifying circuit 34 even though received bands are changed.

Even though impedance on the VHF band has been described above, the same is applied to impedance on the UHF band.

### (Third Embodiment)

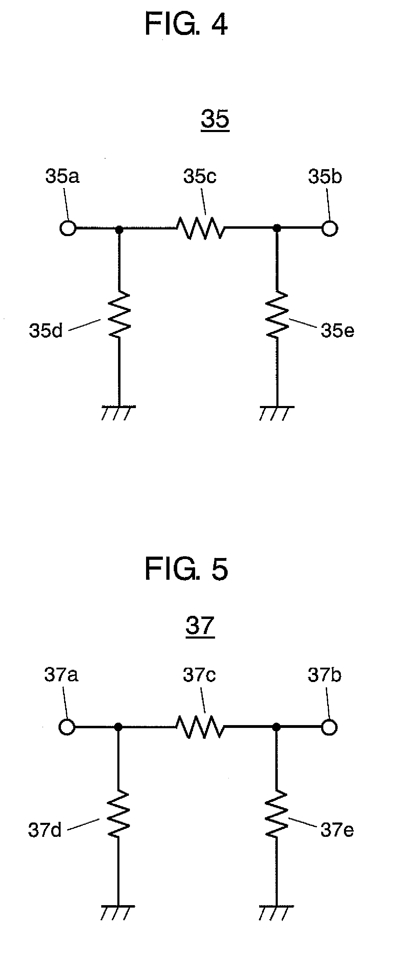

A third embodiment of the invention describes attenuators 35 and 37 that are used in matching device for an antenna 22 with reference to Figs. 4 and 5.

Fig. 4 is a circuit diagram of attenuator 35 connected between antenna amplifying circuit 34 and output terminal 22b. Terminals 35a and 35b are input and output terminals of attenuator 35, respectively. When an output signal of antenna amplifying circuit 34 is output from output terminal 22b, attenuator 35 is constructed of pi-shaped attenuator consisting of resistors 35c, 35d, and 35e. Thus, output impedance of matching device for an antenna 22 may have only a resistive component, for example, 75 Ω, with no reactance component without depending on magnitude of frequency.

Thus, even though input impedance of high-frequency receiving unit 23 is changed by received channels, tuning loss caused by coupling with high-frequency receiving unit 23 may be fixed within an allowable range. That is, it is possible to maintain constant reception sensitivity between channels.

For example, when resistor 35c is 47 Ω, resistor 35d is 330 Ω, and resistor 35e is 330Ω, attenuator 35 has an attenuation of 4 dB. Attenuator 35 can be set to have an optimum attenuation by selecting appropriate resistors.

Fig. 5 is a circuit diagram of attenuator 37 connected between electronic switch 36 and output terminal 22b. Terminals 37a and 37b are input and output terminals of attenuator 37, respectively. By outputting an output signal of antenna amplifying circuit 34 from output terminal 22b and using as attenuator 37 a pi-shaped attenuator consisting of resistors 37c, 37d, and 37e, output impedance of matching device for an antenna 22 may have only a resistive component, for example, 75 Ω, with no reactance component without depending on magnitude of frequency.

Thus, even though input impedance of high-frequency receiving unit 23 is changed by received channels, tuning loss caused by coupling with high-frequency receiving unit 23 may be fixed within an allowable range. That is, it is possible to maintain constant reception sensitivity between channels.

For example, when resistor 37c is 47 Ω, resistor 37d is 330 Ω, and resistor 37e is 330 Ω, an attenuation can be set to 4 dB. In addition, attenuator 37 can be set to have an optimum attenuation by selecting appropriate resistors.

Individual attenuators 35 and 37 may be constructed of T-shaped resistors. Further, a circuit with no resistor 35d or a circuit with no resistor 37d may be used.

### (Fourth Embodiment)

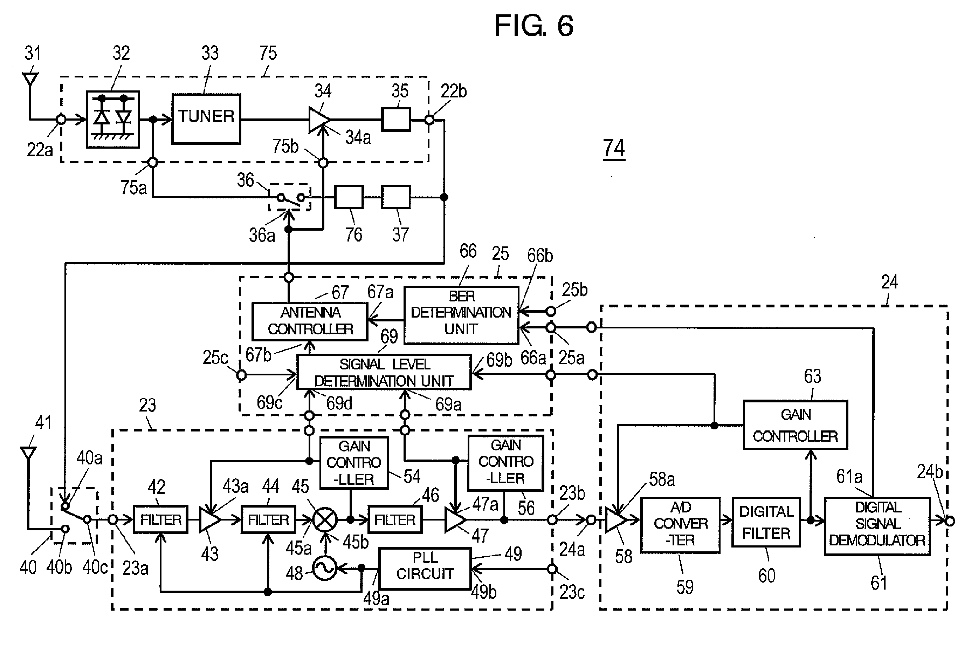

High-frequency receiver 74 according to a fourth embodiment of the invention will be described with reference to Fig. 6. In the first embodiment shown in Fig. 1, matching device for an antenna 22 includes electronic switch 36 and attenuator 37. In the fourth embodiment shown in Fig. 6, electronic switch 36 and attenuator 37 are provided outside matching device for an antenna 75, and electronic switch 36 is connected to the input terminal of matching device 33, rather than the input terminal of antenna amplifying circuit 34.

In Fig. 6, the same elements as those shown in Fig. 1 are denoted by the same reference numerals and the detailed descriptions thereof will be omitted. The input terminal of matching device 33 is connected to output terminal 75a. Electronic switch 36, matching device 76, and attenuator 37 are connected between output terminal 75a and output terminal 22b in that order as viewed from output terminal 75a.

An antenna control signal output from antenna controller 67 is input to control input terminal 36a of electronic switch 36 and simultaneously is input to control input terminal 34a of antenna amplifying circuit 34 through input terminal 75b.

The operation of high-frequency receiver 74 is basically the same as that described in Fig. 1 and the detailed description thereof will be omitted.

Referring to Fig. 6, electronic switch 36, matching device 76, and attenuator 37 are connected between output terminal 75a and output terminal 22b of matching device for an antenna 75. That is, since they are provided outside matching device for an antenna 75, it is possible to reduce the size of matching device for an antenna 75 and simultaneously to provide matching device for an antenna 75 adjacent to small antenna 31. Accordingly, small antenna 31 and matching device for an antenna 75 can be formed as a single body.

Matching device 76 is provided between output terminal 75a and output terminal 22b and outside matching device for an antenna 75. When matching device 76 is separated from matching device for an antenna 75, matching device 76 can have a tuning circuit with a lot of elements. Thus, it is possible to secure tuning between small antenna 31 and high-frequency receiving unit 23. Accordingly, it is possible to prevent a change in tuning loss by the received channels.

Output terminal 75a of matching device for an antenna 75 may be connected to the input terminal of antenna amplifying circuit 34, instead of the input terminal of matching device 33. In this case, when antenna amplifying circuit 34 has input impedance of about 75 Ω, matching device 33 has output impedance of 75 Ω. Thus, it is not necessary to provide matching device 76, resulting in matching device for an antenna 75 with a reduced size.

### (Fifth Embodiment)

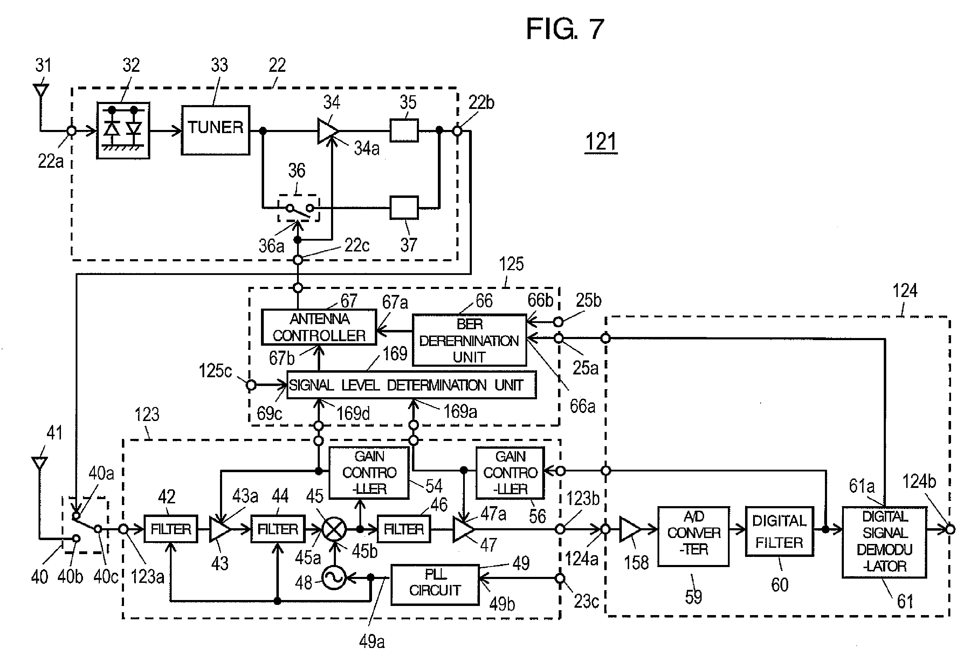

High-frequency receiver 121 according to a fifth embodiment of the invention will be described with reference to Fig. 7. In the first embodiment, amplifying circuits 47 and 58 are gain-controlled by gain controllers 56 and 63, respectively. In addition, the gain control voltages from gain controllers 54, 56, and 63 are input to input terminals 69d, 69a, and 69b of signal level determination unit 69, respectively.

In the fifth embodiment (see Fig. 7), gain controller 63 is not provided, but amplifying circuit 158 having constant amplification degree is used. That is, the first to fourth embodiments have used amplifying circuit 58 having a variable amplification degree, as shown in Figs. 1 and 6, while the fifth embodiment uses amplifying circuit 158 having a fixed amplification degree. An output signal of digital filter 60 other than an output signal of amplifying circuit 47 is input to an input terminal of gain controller 56. Gain control voltages from gain controllers 54 and 56 are input to input terminals 169d and 169a of signal level determination unit 169, respectively.

In Fig. 7, the same elements as those shown in Fig. 1 are denoted by the same reference numerals and a simplified description thereof will be given.

High-frequency receiver 121 includes matching device for an antenna 22 that is connected to small antenna 31, high-frequency receiving unit 123 that is connected to output terminal 22b of matching device for an antenna 22, demodulator 124 that is connected to output terminal 123b of high-frequency receiving unit 123 and has output terminal 124b, and antenna control unit 125 that receives gain control voltages output from gain controllers 54 and 56 of high-frequency receiving unit 123, respectively, and BER signal output from demodulator 124 to control electronic switch 36. The operation of high-frequency receiver 121 is basically the same as that described in Fig. 1 and a simplified description thereof will be given.

A received signal input to input terminal 123a is frequency-converted by mixer 45 and simultaneously is gain-controlled in amplifying circuits 43 and 47 such that signal levels output from output terminal 123b can be constant.

For example, in a strong electric field area where a strong interference signal is expected to be input, signal level determination unit 169 is used to compare gain control voltages of gain controllers 54 and 56 with upper and lower limits of a reference voltage of each of gain controllers 54 and 56, thereby detecting the level of the interference signal.

Upper and lower limits of reference voltage of signal level determination unit 169 are input through reference voltage input terminal 125c. Thus, since it is an external terminal, it is possible to easily set an optimum value from reference voltage input terminal 125c.

A determination signal from signal level determination unit 169 is input to input terminal 67b of antenna controller 67. By an antenna control signal output from antenna controller 67, power supply to antenna amplifying circuit 34 stops and simultaneously electronic switch 36 is closed.

Thus, since the interference signal can be reduced, for example, by 15 dB, it is possible to prevent distortion from occurring in matching device for an antenna 22 and to prevent distortion from occurring in amplifying circuit 43 and mixer 45, thereby improving interference-resistant characteristics of high-frequency receiver 121. At this time, a desired signal is reduced from -50 dBm to -75 dBm, and BER is not deteriorated, as shown in characteristic curve 105 of Fig. 2.

When only a desired signal (equal to or more than -50 dBm) is received with no an interference signal, a signal with a constant level that is gain-controlled by amplifying circuit 43 having a gain control range of 0 dBm to -50 dBm is input to amplifying circuit 47. Thus, since gain control voltage of amplifying circuit 47 has a minimum gain, the gain control voltage of gain controller 56 remains unchanged.

Accordingly, it is possible to detect the magnitude of the desired signal level by using the gain control voltages of individual gain controllers 54 and 56 to perform determination in signal level determination unit 169.

A determination signal from signal level determination unit 169 is input to input terminal 67b of antenna controller 67. By an antenna control signal output from antenna controller 67, power supply to antenna amplifying circuit 34 stops and simultaneously electronic switch 36 is closed.

Accordingly, since the desired signal can be reduced by about 15 dB, it is possible to suppress distortion from occurring in amplifying circuit 43 and mixer 45 and to improve interference-resistant characteristics of high-frequency receiver 121.

A case where a desired signal is received in a weak electric field area (equal to or less than -90 dBm) will be described. When a desired signal is received in a weak electric field area (equal to or less than -90 dBm), amplifying circuit 43 is controlled so as to obtain a maximum gain, and a signal with a constant level that is gain-controlled by amplifying circuit 47 is input to A/D converter 59. Thus, the gain control voltage of gain controller 56 is changed.

Accordingly, it is possible to detect the magnitude of the desired signal level by using gain control voltage of gain controller 56 to perform determination in signal level determination unit 169. Power is supplied to antenna amplifying circuit 34 of matching device for an antenna 22 by antenna controller 67 to which the determination signal from signal level determination unit 169 is input, such that electronic switch 36 is opened.

Thus, an output signal of antenna amplifying circuit 34 is output from output terminal 22b. An input signal level input to high-frequency receiving unit 123 can be raised by about 15 dB compared to a case where an output signal of matching device 33 is output from output terminal 22b. As a result, reception sensitivity with respect to a weak signal level is improved.

When a signal is received in a strong electric field area in which a large interference signal exists, the gain of matching device for an antenna 22 is reduced by an antenna control signal from antenna controller 67. Thus, it is possible to output a signal with distortion suppressed from high-frequency receiving unit 123.

When a signal is received in a weak electric field area, matching device for an antenna 22 operates with a gain close to a maximum value by an antenna control signal from antenna controller 67. Thus, it is possible to output a signal with noise suppressed from high-frequency receiving unit 123.

Accordingly, it is possible to provide high-frequency receiver 121 satisfying both an interference characteristic in a strong electric field area and reception sensitivity in a weak electric field area by switching the operation state of matching device for an antenna 22 by the antenna control signal.

A determination signal from BER determination unit 66 is input to antenna controller 67. BER determination unit 66 compares the magnitude of the received BER with the BER reference value (2 × 10⁻⁴), and determines whether or not the magnitude is appropriate. Thus, since antenna controller 67 performs determination using the determination signals of signal level determination unit 169 and BER determination unit 66, accuracy in determination increases.

Gain control ranges of individual amplifying circuits 43, 47, and 158 of high-frequency receiving unit 123 may be reset based on the interference characteristic and reception sensitivity. Only one of gain controllers 54 and 56 may not be sufficient to detect the magnitudes of the desired signal and interference signal. In this case, gain controllers 54 and 46 may be used to detect the magnitudes of the desired signal and interference signal.

The gain control voltages are configured to correspond to variable reception conditions. Accordingly, it is possible to select optimum reception performance in a short time to correspond to a case where a signal is received in a strong electric field area where a strong interference signal exists or a case where a signal is received in a weak electric field area. Accordingly, this is desirable when TV signals are received during movement.

Even though super single mixer 45 is used in high-frequency receiving unit 123, direct-conversion mixer may be used. That is, two mixers for I and Q signals are used as mixer 45, and the oscillation signals that are output from oscillator 48 and have a phase difference of 90° to each other are input to the mixers for I and Q signals.

When the direct-conversion mixer is used, frequencies after direct-conversion become low-frequency signals of the I and Q signals. That is, since it is possible to perform signal processing to low frequencies, integration is facilitated, and interference with other signals is suppressed.

Even though a case where digital TV broadcast signals are received has been described in the embodiment of the invention, the same is applied to a case where analog TV broadcast signals are received. That is, an analog signal demodulator (not shown) may be used, instead of digital signal demodulator 124, and an S/N detection signal from the analog signal demodulator may be used. Accordingly, it is possible to obtain the same effect by inputting the S/N detection signal to the S/N determination unit, instead of BER determination unit 66, and inputting a determination value from the S/N determination unit to antenna controller 67.

### Industrial Applicability

A matching device for an antenna and a high-frequency receiver using the matching device for an antenna according to the invention can improve both an interference characteristic in a strong electric field area and reception sensitivity in a weak electric field area. In particular, the matching device for an antenna and high-frequency receiver are useful when signals are received during movement in a strong electric field area where a strong interference signal exists.

## Claims

1. A matching device for an antenna that is connected to an input terminal of a high-frequency receiving unit receiving TV broadcast signals, comprising:
a first input terminal to which received signals input to an antenna are input;
a matching device that is connected to the first input terminal and suppresses tuning loss;
an antenna amplifying circuit that is connected to an output terminal of the matching device and amplifies the received signals;
a first output terminal to which output signals of the antenna amplifying circuit are input;
a first electronic switch that is connected in parallel to input and output terminals of the antenna amplifying circuit: and
an antenna control terminal that controls the first electronic switch and the antenna amplifying circuit,
wherein, when an antenna control signal output from the high-frequency receiving unit is input to the antenna control terminal, the first electronic switch is opened and power supply to the antenna amplifying circuit starts in a first electric field area, and the first electronic switch is closed and power supply to the antenna amplifying circuit stops in a second electric field area.

2. The matching device for an antenna of Claim 1,
wherein a second output terminal that is connected to an input terminal of the antenna amplifying circuit and is connected to the first electronic switch externally provided between the first output terminal and the second output terminal is provided, instead of the first electronic switch that is connected in parallel to input and output terminals of the antenna amplifying circuit.

3. The matching device for an antenna of Claim 1,
wherein a third output terminal that is connected to an input terminal of the matching device and is connected to the first electronic switch externally provided between the first output terminal and the third output terminal is provided, instead of the second output terminal.

4. The matching device for an antenna of Claim 1,
wherein the matching device for an antenna stops the power supply to the antenna amplifying circuit after the first electronic switch is closed, and opens the first electronic switch after the power supply to the antenna amplifying circuit starts according to the antenna control signal.

5. The matching device for an antenna of Claim 1,
wherein an attenuator that attenuates signal levels and uses a resistive component as output impedance is connected between the antenna amplifying circuit and the first output terminal.

6. The matching device for an antenna of Claim 1,
wherein an attenuator that attenuates signal levels and uses a resistive component as output impedance is connected between the first electronic switch and the first output terminal.

7. A high-frequency receiver comprising:
the matching device for an antenna of Claim 1;
a high-frequency receiving unit that receives at a second input terminal an output signal of the first output terminal of the matching device for an antenna; and
an antenna control unit that receives first and second gain control voltages output from the high-frequency receiving unit and controls the matching device for an antenna,
wherein the high-frequency receiving unit includes:
a first amplifying circuit that receives received signals input through the second input terminal,
a mixer that receives at an input terminal an output signal of the first amplifying circuit,
an oscillator that is connected to another input terminal of the mixer,
a PLL (Phase Locked Loop) circuit that controls frequencies of the oscillator by PLL,
a second amplifying circuit that receives an output signal of the mixer,
a fourth output terminal to which an output signal of the second amplifying circuit is input,
a first gain controller that receives an output signal of the mixer and gain-controls the first amplifying circuit, and
a second gain controller that receives an output signal of the second amplifying circuit and gain-controls the second amplifying circuit, and
the antenna control unit includes:
a signal level determination unit that compares at least one of first and second gain control voltages output from the first and second gain controllers with predetermined reference voltages of the first and second gain controllers, and
an antenna control unit that receives a determination signal output from the signal level determination unit and outputs an antenna control signal for controlling the matching device for an antenna, and
the first electronic switch is opened and power supply to the antenna amplifying circuit starts, and the first electronic switch is closed and power supply to the antenna amplifying circuit stops, according to the antenna control signal output from the antenna control unit.

8. The high-frequency receiver of Claim 7,
wherein the first mixer is a direct-conversion mixer.

9. The high-frequency receiver of Claim 7, further comprising:
a demodulator that receives an output signal of the high-frequency receiving unit through a third input terminal,
wherein the demodulator includes a third amplifying circuit that receives a signal from the third input terminal,
a demodulator that receives an output signal of the third amplifying circuit and outputs a demodulation signal, and
a third gain controller that receives an output signal of the third amplifying circuit and gain-controls the third amplifying circuit,
wherein the signal level determination unit compares at least one of first, second and third gain control voltages output from the first, second and third gain controllers with predetermined reference voltages of the first, second and third gain controllers.

10. The high-frequency receiver of Claim 9,
wherein the antenna control unit includes:
a BER (Bit Error Ratio) determination unit that compares a BER output from a digital signal demodulator with a BER reference value, and
an antenna controller that receives a determination signal output from the signal level determination unit and the BER determination unit and inputs an antenna control signal for controlling the matching device for an antenna.

11. The high-frequency receiver of Claim 10,
wherein an analog signal demodulator, instead of the digital signal demodulator, and an S/N (signal-to-noise) determination unit that compares an S/N reference value with S/N output from the analog signal demodulator, instead of the BER determination unit, are provided.

12. A high-frequency receiver comprising:
the matching device for an antenna of Claim 1;
a high-frequency receiving unit that receives at a second input terminal an output signal of the first output terminal of the matching device for an antenna; and
an antenna control unit that receives first and second gain control voltages output from the high-frequency receiving unit and controls the matching device for an antenna,
wherein the high-frequency receiving unit includes:
a first amplifying circuit that receives received signals input through the second input terminal,
a mixer that receives at an input terminal an output signal of the first amplifying circuit,
an oscillator that is connected to another input terminal of the mixer,
a PLL (Phase Locked Loop) circuit that controls frequencies of the oscillator by PLL,
a second amplifying circuit that receives an output signal of the mixer,
a demodulator to which an output signal of the second amplifying circuit is input,
a second output terminal through which a signal from the demodulator is output,
a first gain controller that receives an output signal of the mixer and gain-controls the first amplifying circuit, and
a second gain controller that receives an output signal of the demodulator and gain-controls the second amplifying circuit, and
the antenna control unit includes:
a signal level determination unit that compares any one or both of first and second gain control voltages output from the first and second gain controllers with predetermined reference voltages of the first and second gain controllers, and
an antenna control unit that receives a determination signal output from the signal level determination unit and outputs an antenna control signal for controlling the matching device for an antenna, and
the first electronic switch is opened and power supply to the antenna amplifying circuit starts in a strong electric field area, and the first electronic switch is closed and power supply to the antenna amplifying circuit stops in a weak electric field area, according to the antenna control signal output from the antenna control unit.
